(19) Europäisches Patentamt
European Patent Office
Office européen des brevets

(11) **EP 2 594 872 A1**

(12) **EUROPEAN PATENT APPLICATION**

(43) Date of publication:
**22.05.2013 Bulletin 2013/21**

(51) Int Cl.:
*F25D 23/00* *(2006.01)* *F25D 23/12* *(2006.01)*
*F25B 29/00* *(2006.01)*

(21) Application number: **11189489.5**

(22) Date of filing: **17.11.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Whirlpool Corporation
Benton Harbor, MI 49022 (US)**

(72) Inventors:
- **Mukherjee, Diptesh
  21025 Comerio (IT)**
- **Singh, Dhirendra
  21025 Comerio (IT)**

- **Grewal, Rameet
  21025 Comerio (IT)**
- **Ranjan, Sant
  21025 Comerio (IT)**
- **Olivani, Andrea
  21025 Comerio (IT)**
- **Alshourbagy, Mohamed
  21025 Comerio (IT)**
- **Pannock, Jurgen
  21025 Comerio (IT)**

(74) Representative: **Guerci, Alessandro
  Whirlpool Europe S.r.l.
  Patent Department
  Viale G. Borghi 27
  21025 Comerio (VA) (IT)**

(54) **Assembly of domestic appliances with a system for utilizing waste heat from refrigerator in a washing appliance**

(57)     An assembly of domestic appliances includes a refrigerator with a compressor, a condenser, a washing appliance and a system for utilizing in the washing appliance waste heat from refrigerator, such system comprising a water reservoir having a latent heat storage unit in heat-exchange relationship with water and mounted in heat-exchange relationship with the compressor and/or the condenser and connected, on one side, to the water mains network and, on the other side, to the washing appliance.

Fig. 2

**Description**

The present invention relates to an assembly of domestic appliances including a refrigerator with a compressor and condenser, a washing appliance and a system for utilizing in the washing appliance waste heat from refrigerator.

Such assembly is disclosed by KR — 2011064739. This document discloses a waste heat recovery system in which residual water from water cleaner and a water dispenser tray is pumped towards a portion of piping wrapped around the compressor casing and the condenser. This known system can therefore deliver a small amount of heated water to the washing appliance, which in the present specification means every kind of appliance which uses water, particularly washing machines and dishwashing machines.

Another disadvantage of the system disclosed by the above document is the possibility to have contamination in the system of residual water, where growth of bacteria or the like can lead to the clogging of the system. Therefore, according to such prior art document, the energy efficiency of the assembly is only slightly improved. It is an object of the present invention to provide an assembly of a refrigerator and a washing appliance which can reduce the energy consumption thereof of a significant amount compared to known solutions.

Such object is reached thanks to the features listed in the appended claims.

According to the invention, the waste heat from the refrigerator (produced in the compressor and/or in the condenser) is used to heat water in a reservoir directly connected to the water mains network, with a completely sealed system avoiding contamination.

The use of a reservoir allows reaching a volume which is comparable to the volume requested in each washing cycle of the washing machine, differently from the reduced amount contained in the tube wrapped around the compressor and the condenser.

The major benefits of such assembly are an energy saving up to 20% of the energy consumption of the dishwasher or washer.

Such result is obtained without any complication of the assembly, since the refrigerator is provided with a hose for connecting it to the water mains network as any washing appliance, as well as with a connection to a washing appliance. Therefore there is no need of pump for circulating water in the system since pressure of water mains is used. In view of the above the assembly works with no need for consumer to interact, no need to drain water if not used for a while, not taking useful space in the kitchen.

According to a preferred feature of the invention, the water tank in heat-exchange relationship with the compressor and/or the condenser of the refrigerator includes a latent heat storage unit based on the use of a phase change material (PCM). The use of a PCM does increase the thermal energy stored in the tank and it can solve the problem when a too high water amount is withdrawn from the tank at a time.

Further advantages and features according to the present invention will become clear from the following detailed description, with reference to the attached drawings, in which:

-    Figure 1 is a schematic view of an assembly according to the invention;
-    Figure 2 is a detail showing a component of the assembly of figure 1;
-    Figure 3 is a diagram showing the water temperature changes in the component of figure 2 according to a first embodiment of the invention;
-    Figure 4 shows temperature diagrams of the refrigerator of figure 1; and
-    Figure 5 shows the temperature diagram of a phase change material (as an example of PCM that called "save® - HS Series" produced by Pluss Polymers Ltd.) and of the water in contact thereto according to a second embodiment of the invention.

With reference to the drawings, an example of an assembly 10 according to the present invention comprises a refrigerator 12 and a dishwasher 14. The refrigerator 12 comprises a water-in hose 16 which has to be connected to a tap of the water mains network 18 and water out hose 20 which has to be connected to the water inlet of the dishwasher 14. Other components of the hydraulic circuit, as the so called "water stopper", non return valves, pressure reducer etc. are not shown in the drawings but the use thereof does not need any explanation for a person skilled in the art. The refrigerator 12 comprises a compressor 22 installed on the structure of the refrigerator and provided with a water tank 24 in heat-exchange contact with the metal wall of the compressor. The tank 22 has a hydraulic connection (not shown) with the inlet hose 16 and with the outlet hose 20 and it is preferably made of stainless steel. Its preferred dimensions are a length L of 480mm, a width B of 180mm and a height H of 150mm, with a wall thickness of about 1 mm. With the above dimensions the tanks 24 holds about 5 litres of water mounted on the compressor, so that it can take waste heat from the compressor. This waste heat heats up water contained in the tank 24 at an average temperature from 10°C to 15°C above ambient temperature. Water connections are done through standard dish washer connection pipes.

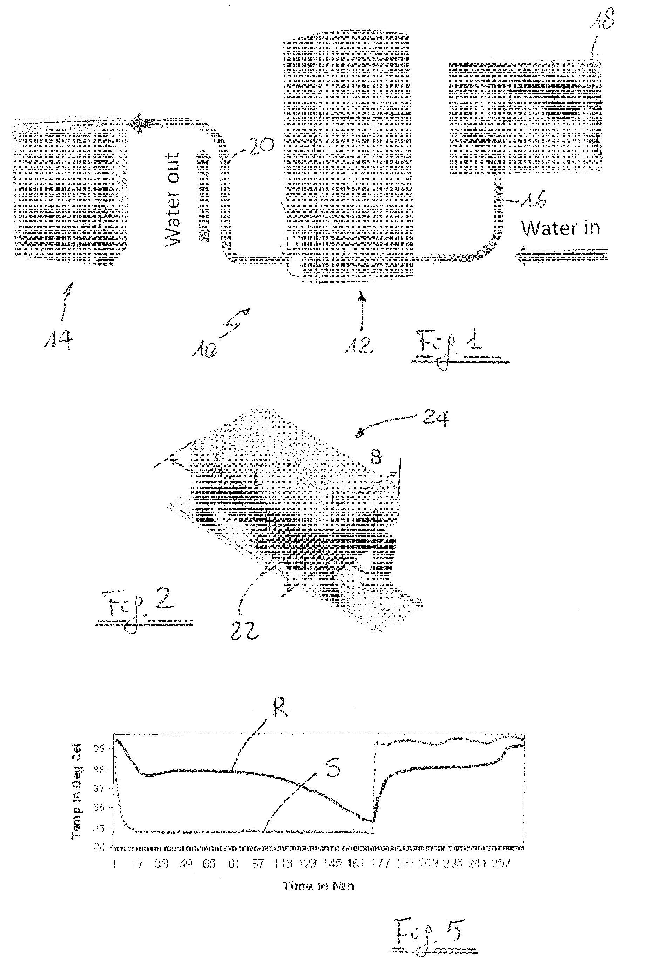

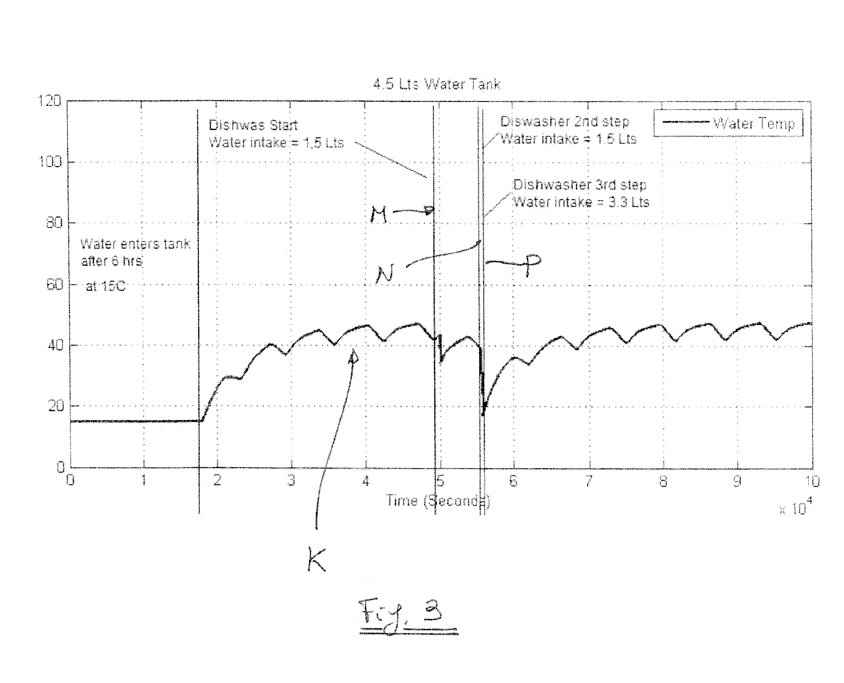

The assembly of figures 1 and 2 works in the following way. The tank 24 is filled by about 5 litres of water from the main water supply 18 that will be heated about +15 C° over ambient temperature in 3 hours, as shown in figure 3 in the phase "K" (in general the final temperature of the water in the tank 24 is around 40°C). The temperature oscillation shown in phase K of figure 3 is due to the on/off function of the compressor and to the fact that some heat is transferred from the tank 24 to the ambient. When the user switch on the program cycle of the dishwasher 14, at time = 0 (reference M in figure 3)about 1.5 litres of water will be delivered from the tank 24 at 40°C to the dishwasher 14 for main wash cycle, which will be immediately replaced by new 1.5 litres of cold water into the tank 24. As a consequence, the temperature of the water in the tank 14 will drop-down. In case the compressor is on, this new 1.5L of water will be heated to 40°C in about 1.3 hours.

At a cycle time of about 90 minutes (reference N in figure 3), another 1.5L of partially heated water will be delivered to the dishwasher 14 for intermediate rinse. Again, this amount will be substituted by new cold 1.5L of water causing the temperature of water in the tank 24 to drop-down.

At t=95 minutes (reference P in figure 3) 3.3 litres of fresh water enter dishwasher 14 for final rinse.

Even if such final rinse is carried out with water having a temperature close to the water mains temperature, nevertheless in the previous two step of the washing cycle there is an energy saving up to 20% of the energy consumption of the dishwasher.

In order to further increase the above energy saving, according to a second embodiment of the invention the tank 24 is provided with a latent heat storage unit which is based on a phase change material (PCM) having preferably a melting point comprised between 30°C and 45°C, and more preferably around 40°C.

Such unit can be of any kind. It can be a compound latent heat material which can be used directly in the water contained in the tank 24 (for instance it can be used a latent heat compound "PK" sold by Rubitherm Technologies). Another solution is to encapsulate the PCM into modules e.g. cylindrical, spherical etc, that are integrated into the tank 24, and that work as a heat exchanger between the PCM and the surrounding heat transfer medium. In order to ensure a good heat exchange between the surrounding heat transfer medium (water) and the PCM, the modules should have a high ratio between surface area and volume, i.e. a high heat transfer area per volume unit. A further solution is the use of a coated aluminium plate filled with hydrated salts PCM that has 150 Wh approximate stored energy (sold by Rubitherm Technologies). The PCM can also be wrapped over the tank 24 by using a PCM jacket.

PCM is a latent heat storage which that is capable of storing and releasing large amounts of energy when changes its phase. The idea to use phase change materials (PCM) for the purpose of storing thermal energy is to make use of the latent heat of a phase change, usually between the solid and the liquid state. Since a phase change involves a large amount of latent energy at constant temperature, PCMs can be used in two ways:

- To speed up the water heating by using PCM with transition temperature in the range from ambient temperature up to 40°C;
- To be used as temperature stabilization (when the compressor is off) by integrating PMCs into the water tank.

By using a tank 24 with PCM the 5 minutes interval between time N and P (figure 3) are sufficient for increasing the water temperature back to around 40°C.

The selection of an appropriate PCM requires the PCM to have a transition temperature within the practical range of application.

The tested PCMs are n-paraffins, waxes and salts or mixture thereof. The salts having melting temperature close to the desired ones are for instance $CaCl_2$ $6H_2O$, $Na_2SO_4$ $10H_2O$, $Na_2HPO_4 12H_2O$, $NaCO_3$ $10H_2O$, and $Na_2S_2O_4$ $5H_2O$.

In figure 5 it is shown how the PCM works. In figure 5 with reference R it is indicated the temperature of the PCM and with reference S the temperature of the water bath. The selected PCM has a melting temperature of about 37°C and a freezing temperature of 35°C. When PCM reaches its phase change temperature, it absorb large amount of latent heat without getting hotter (left portion of figure 5). When the temperature of water around the PCM drops, it solidifies and releases its stored latent heat to the surrounding water (right portion of figure 5).

During the compressor run cycle, the heated water which absorbs the energy from the compressor 22 is stored in the tank 24.

The PCM will start to melt by absorbing the energy (without changing the surrounding temperature). Thus the PCM can be charged during the ON cycle. In the OFF cycle, in the absence of heating energy, the temperature of the heated water decreases by loss of heat to the environment. When the temperature goes below 35°C, PCM will start to freeze. During its freezing, it will give back the latent heat to the water, maintaining the water temperature at not less than 35°C. This further increases the efficiency of the water tank.

EXAMPLE

A PCM of inorganic salt type that has freezing temp of about 35°C was used (phase change temperature of 34°C -36°C) with an operating range from 34°C to 40°C.

Water volume = 5 litres
Water Specific heat= 4.18 kJ/kg K
PCM Qty = 2 kg
PCM Latent Heat Capacity = 150 kJ/Kg

With the above values, it is possible to estimate the energy stored either by water or by PCM:

$$\text{Energy stored by water = Mass x Specific heat x Temperature change}$$

$$= 5 \times 4.18 \times (40\text{-}25) = 313.5 \text{ kJ}$$

$$\text{Energy stored by PCM = Mass x Latent Heat}$$

$$= 2 \times 150 = 300 \text{ kJ}$$

$$\text{Total heat stored = Energy stored by water + Energy stored by PCM= 631.5 kJ.}$$

The result of the test has shown an efficiency improvement of about 47%.

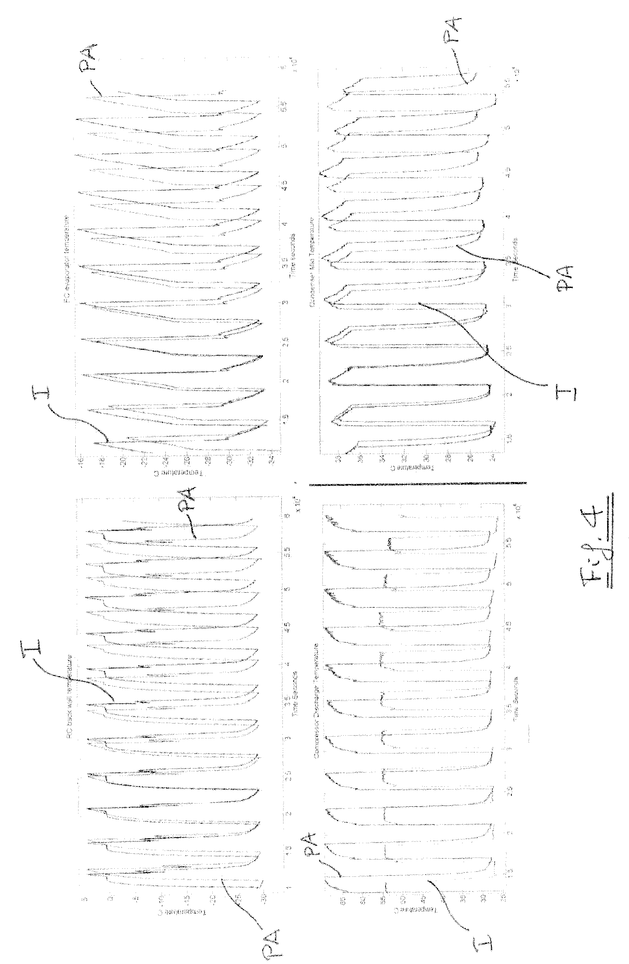

With reference to figure 4 it can be seen how the addition of the tank 24 to the refrigerator 12 has no negative impact of the working conditions of the refrigerator. Either the back wall temperature of the refrigeration compartment (upper left diagram), or the evaporator temperature (upper right diagram), or the condenser temperature (lower right diagram) do not show significant changes (in the diagrams with "PA" it is indicated the temperatures in a traditional fridge, while with "I" it is indicated the temperature of the fridge included in the assembly of the invention. On the other hand the compressor discharge temperature (lower left diagram) shows that the compressor 22 is running much colder compared to normal operating condition, with beneficial effects in term of compressor working conditions.

Even if the above description is focused on the assembly comprising a dishwashing machine, nevertheless the assembly can include a washing machine or a combination several washing appliances. Moreover, the recovery of waste heat can be carried out also from the condenser of the refrigerator as well.

The tank 24 associated with the compressor 22 can be any kind of water reservoir, including also a metal tube wound around the metal casing of the compressor.

**Claims**

1. Assembly (10) of domestic appliances including a refrigerator with a compressor (22), a condenser, a washing appliance (14) and a system for utilizing in the washing appliance waste heat from refrigerator, **characterised in that** it comprises a water reservoir (24) mounted in heat-exchange relationship with the compressor (22) and/or the condenser and connected, on one side, to the water mains network (18) and, on the other side, to the washing appliance (14).

2. Assembly according to claim 1, wherein it includes a latent heat storage unit in heat-exchange relationship with the water reservoir (24) in order to increase the thermal energy stored in said reservoir.

3. Assembly according to claim 2, wherein the latent heat storage unit comprises at least a container for a phase change material (PCM).

4. Assembly according to claim 3, wherein the PCM is selected in the group consisting of paraffins, waxes, salts or mixture thereof.

5. Assembly according to claim 3, wherein the salts are selected in the group consisting of $CaCl_2$ $6H_2O$, $Na_2SO_4$ $10H_2O$, $Na_2HPO_4 12H_2O$, $NaCO_3$ $10H_2O$, and $Na_2S_2O_4$ $5H_2O$ or mixtures thereof.

6. Assembly according to any of claims 3-5, wherein the containers for PCM comprise hollow modules filled with PCM.

7. Assembly according to any of claims 3-6, wherein the melting temperature of the PCM is comprised between 30°C and 45°C.

8. Method for recovering waste heat from a refrigeration appliance (12), particularly from the compressor (22) or condenser thereof, **characterised in that** it comprises the following steps:

- providing a water reservoir (24) in heat-exchange relationship with the compressor (22) and/or condenser,
- providing a water connection (16, 20) from the water mains network (18) to said reservoir (24) and from said reservoir to a washing appliance (14), and
- arrange a water flow towards the washing appliance (14).

9. Method according to claim 8, wherein the water reservoir (24) comprises a latent heat storage unit.

Water out

20

Water in

16

18

14

10

12

Fig. 1

24

B

L

h

Fig. 2

22

R

S

Temp in Deg Cel

39
38
37
36
35
34

1  17  33  49  65  81  97  113  129  145  161  177  193  209  225  241  257

Time in Min

Fig. 5

Fig. 3

Fig. 4

Europäisches
Patentamt

European
Patent Office

Office européen
des brevets

## EUROPEAN SEARCH REPORT

**Application Number**

EP 11 18 9489

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 507 933 A (CHAPA ROMAN [US] ET AL) 2 April 1985 (1985-04-02) | 1,8 | INV. F25D23/00 F25D23/12 F25B29/00 |
| Y | * column 3, line 1 - column 4, line 56; figure 1 * | 2-7,9 | |
| Y | DE 100 45 074 A1 (BSH BOSCH SIEMENS HAUSGERAETE [DE]) 28 March 2002 (2002-03-28) * paragraph [0004] - paragraph [0029]; figure 2 * | 2-7,9 | |
| X | US 4 487 032 A (SPEICHER TERRY L [US]) 11 December 1984 (1984-12-11) * column 3, line 28 - column 4, line 7; figure 3 * | 1,8 | |
| A | WO 01/20234 A1 (UT BATTELLE LLC [US]) 22 March 2001 (2001-03-22) * abstract; figure 2 * | 1,8 | |

**TECHNICAL FIELDS SEARCHED (IPC)**

F25D
F25B

The present search report has been drawn up for all claims

| Place of search | Date of completion of the search | Examiner |
|---|---|---|
| Munich | 8 March 2012 | Jessen, Flemming |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 18 9489

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2012

| Patent document cited in search report | | Publication date | Patent family member(s) | | Publication date |
|---|---|---|---|---|---|
| US 4507933 | A | 02-04-1985 | NONE | | |
| DE 10045074 | A1 | 28-03-2002 | NONE | | |
| US 4487032 | A | 11-12-1984 | NONE | | |
| WO 0120234 | A1 | 22-03-2001 | AU | 7478600 A | 17-04-2001 |
| | | | WO | 0120234 A1 | 22-03-2001 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 2011064739